# EUROPEAN PATENT APPLICATION

(11) **EP 0 925 908 A1**
(43) Date of publication of application: **30.06.1999**
(21) Application number: 98830728.6
(22) Date of filing: 03.12.1998
(51) Int. Cl.: B30B 9/32, B29B 17/00

(54) **Device with manoeuvering means suited to crush plastic bottles and metal cans**

(30) Priority: 04.12.1997 IT MI972691
(71) Applicant: Perobelli, Aldo, Paderno Dugnano (Milano) (IT)
(72) Inventor: Perobelli, Aldo, Paderno Dugnano (Milano) (IT)
(74) Representative: Adorno, Silvano

(57) **Abstract**

Device suited to crush plastic bottles and metal cans comprising two boards (1, 2) suited to house a bottle (3) or a can (4) to be crushed by the rotation of one board towards the other by virtue of manoeuvring means that can be operated by hand.

## Description

The present invention relates to a device with manoeuvring means suited to crush items such as plastic bottles or metal cans by minimizing their size to facilitate their disposal in containers for differentiated refuse collection.

A commercially available device, suited to crush plastic bottles in the upright position comprising a fixed member for supporting the bottle and a moveable member provided with side handles and which is slid along the fixed member by pressing said handles by hand, is known. This solution suffers the disadvantage that, due to its structure, this known device is unable to minimize bottles' size by crushing, since considerable room remains between the upper part of the movable member and the fixed member at the end of the sliding movement. Moreover rigid plastic bottles and metal cans offer strong resistance being compressed along the vertical axis, so the crushing force to be applied would be great thus making the known device unusable for those items.

The device which is the object of the present inventors allows doing away with the mentioned drawbacks and especially has the advantage of being suited to crush items such as rigid plastic bottles or cans by minimizing their thickness using manoeuvring means so that the crushing occurs with the minimum effort required for the manual manoeuvre of such means.

Such advantages will be highlighted in detail in the following specification in an illustrative, non limiting way with reference to the enclosed drawings where:
FIGURE 1 shows a perspective view of the device with a bottle before crushing;
FIGURE 2 shows a perspective view of the device with a can lying in the horizontal position after a preliminary crushing;
FIGURE 3 shows a perspective view of the device with a can after the preliminary crushing before the final crushing;
FIGURE 4 shows a second embodiment of the device in a perspective view in a closed position; and
FIGURE 5 shows a schematic view of the movements of the various parts of the device.

Referring now to the figures, the present device comprises an upper board 1 and a lower board 2 hinged together at a first end suited to receive a bottle 3 or a can 4 to be crushed by means of the rotation of one board towards the other one in the direction of arrow A.

In particular, the boards 1 and 2 have at said first ends two lateral hinges 5 and 6 disposed by the sides of an opening 7 made on the boards 1 and 2.

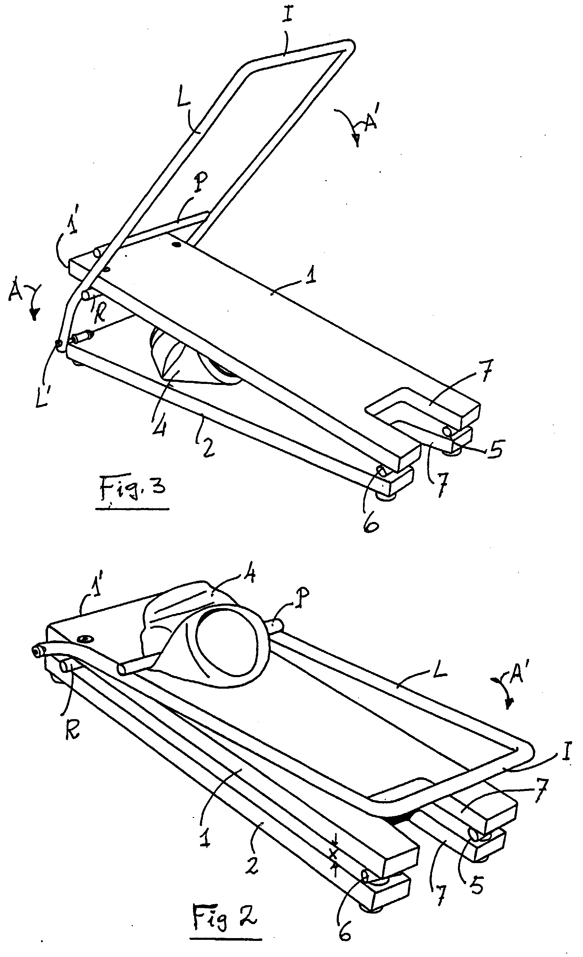

This opening helps avoid the crushing of the cap, if any, which closes the bottle 3 and, when the boards are closed, that is with no item to be crushed, there exists a gap X, as in figure 2, which is substantially roughly equal to the thickness of the bottle or of the can after crushing and enables the boards, at the end of the crushing phase, to be almost parallel so that the crushing action is effective on the entire surface contacting the boards 1, 2 with the bottle 3 or the can 4.

According to the new features of the present invention, the device is provided with manoeuvring means comprising a lever L hinged at L' in the second end of the lower board 2. This lever lowered in the direction of arrow A' against an abutment R fixed to the upper board 1 results in the crushing of the bottle 3 or of the can 4 by the board 1 against the board 2 with a progressive extension of the lever arm between the handle I of the manoeuvring lever L and said abutment R, as is clearly shown in the schematic view of figure 5.

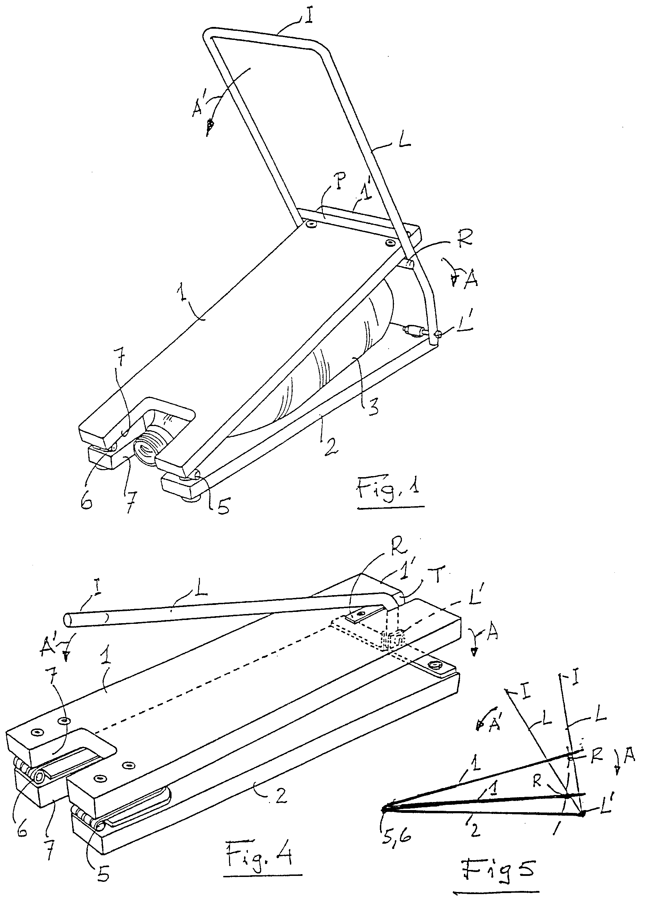

In detail, said abutment R, as is clearly shown in figures 1, 2, 3, is located at the second end of the upper board 1. In this case the manoeuvring lever L consists of two arms bearing on their upper part the handle I, which arms upon their lowering in the direction of arrow A' beat against the abutment R and rotate the board 1 in the direction of arrow A.

The lever L can be lowered against the edge 1' of the board 1 opposite its hinge, such edge lying further back in comparison with the hinge point L' of lever L.

Said manoeuvring lever L carries a bar P which upon rotation in the direction of arrow A' performs a preliminary crushing of a can 4 against the outer face of the upper board 1, as is seen in figure 2. The bar P can have a thread in the middle between the two manoeuvring arms suited to house a screw, which presses against board 1 and performs the crushing of the bottle or of the can with minimum effort. The bar P can also be used to crush the upper board 1 against the lower board 2 acting on the outer face of the upper board 1.

According to another feature of the present invention at least one of the boards 1 and 2 can be heated to keep the crushed shape of the bottle after the crushing deformation and the lower board 2 can bear on its outer face means suited to hang the device on a wall.

A second embodiment illustrated in figure 4 foresees a manoeuvring lever L made up of a single arm which upon lowering in the direction of arrow A' through a notch T of the second end of board 1 lowers the board 1 towards the board 2 in the direction of arrow A and crushes the item. The notch T can house an abutment R made of a material which is different from the board, against which abutment the lever L can be lowered.

The crushing occurs with the minimum effort required for the manoeuvre of the device because also in this case the lever arm between the handle I and the abutment R progressively increases as lever L is lowered by hand in the direction of arrow A'.

Also in this case the abutment of lever L can be made up of the edge 1' opposite the hinges of board 1, this lying further back in comparison with the hanging point of the lever.

It is therefore possible to perform the preliminary crushing of the can according to the solution of figure 4 between the single-arm lever L and the board 1 placing the can between these members.

Once their size has been minimized, both the bottles and the cans can be taken out of the device for subsequent disposal by rotating for example board 1 in the opposite direction of arrow A.

It is understood that said device is subject to alterations without departing from the scope of the present invention as protected by the following claims.

## Claims

1. A device for crushing plastic bottles or cans comprising two boards, an upper board (1) and a lower board (2) hinged at (5, 6) at a first end thereof, which boards (1, 2) house the bottle (3) or the can (4), characterized in that there are provided manoeuvring means suited to rotate the upper board (1) in the direction of arrow (A) towards the lower board (2) by pressing the bottle (3) or the can (4) against said lower board (2).

2. A device according to claim 1, characterized in that said manoeuvring means consist of a lever (L) hinged at (L') to the second end of the lower board (2), which lever (L) upon lowering in the direction of arrow (A') against an abutment (R) fixed to the upper board (1) rotates the latter in the direction of arrow (A).

3. A device according to claim 2, characterized in that the manoeuvring lever (L) is made up of two arms which bear on their upper part the handle (I), which arms upon lowering beat against said abutment (R).

4. A device according to each of claims 2 and 3, characterized in that said manoeuvring lever (L) carries a bar (P) suited for the preliminary crushing of a can (4) against the outer face of the upper board (1) upon rotation of lever (L) in the direction of arrow (A').

5. A device according to claim 2, characterized in that said abutment (R) is made up of a bar fixed to the second end of the upper board (1).

6. A device according to claim 2, characterized in that the manoeuvring lever (L) consists of a single arm which upon its lowering through a notch (T) in the second end of the board (1) beats against said abutment (R) made up of a small block adjacent to said notch (T).

7. A device according to claim 1, characterized in that said manoeuvring means consist of a lever (L) hinged at (L') to the second end of the lower board (2), which upon its lowering in the direction of arrow (A'), against the upper board (1) or the edge (1') of its second end rotates the board (1) in the direction of arrow (A).

8. A device according to claim 4, characterized in that said bar (P) upon rotation of lever (L) lowers in the direction of arrow (A') against the upper board (1) rotating the latter in the direction of arrow (A).

9. A device according to claim 4, characterized in that the bar (P) houses a screw which is suitable to be manoeuvred to press against the board (1) upon rotation in the direction of arrow (A).

10. A device according to claim 6, characterized in that said single arm is suitable for the preliminary crushing or a can (4) against he outer face of the upper board (1) upon rotation of said arm in the direction of arrow (A').

11. A device according to each one of the preceding claims, characterized in that at least one of the boards (1, 2) is heated.

12. A device according to each one of the preceding claims, characterized in that the lower board (2) is suited to carry on its outer face means to hang the device on a wall.
